# EUROPÄISCHE PATENTANMELDUNG

(11) **EP 0 978 440 A2**
(43) Veröffentlichungstag der Anmeldung: **09.02.2000**
(21) Anmeldenummer: 99114747.1
(22) Anmeldetag: 28.07.1999
(51) Int. Cl.: B62D 5/07, B60K 41/22

(54) **Hydrauliksystem zum Betätigen von wenigstens zwei Funktionsbereichen in einem Fahrzeug**

(30) Priorität: 01.08.1998 DE 19834765
(71) Anmelder: Hydraulik-Ring GmbH, 09212 Limbach-Oberfrohna (DE)
(72) Erfinder: Meyer, Roland, 91554 Roth (DE); Knecht, Andreas, 72119 Ammerbuch (DE); Tischer, Dieter, 73240 Wendlingen (DE); Niethammer, Bernd, 72622 Nürtingen (DE); Trzmiel, Alfred, 72661 Grafenberg (DE)
(74) Vertreter: Kohl, Karl-Heinz

(57) **Zusammenfassung**

Das Hydrauliksystem dient zum Lenken und Schalten eines Kraftfahrzeuges. Es weist einen Tank (11) für das Hydraulikmedium auf, von dem aus das Medium über Ventile (14) dem jeweiligen Funktionsbereich (1, 2, 17) zuführbar ist. Um die beiden Funktionsbereiche (1, 2, 17) des Fahrzeuges kostengünstig und zuverlässig mit dem Hydraulikmedium versorgen zu können, ist den beiden Funktionsbereichen (1, 2, 17) ein Verteilerventil (14) zugeordnet, das den Strom des Hydraulikmediums zu den beiden Funktionsbereichen (1, 2, 17) so steuert, daß der eine Funktionsbereich (1, 2, 17) Vorrang vor dem anderen Funktionsbereich (1, 2, 17) hat. Ist der eine Funktionsbereich (1, 2, 17) beispielsweise die Lenkung und der andere Funktionsbereich (1, 2, 17) das automatisierte Handschaltgetriebe des Fahrzeuges, dann wird mit dem Verteilerventil (14) gewährleistet, daß die Lenkung des Fahrzeuges Priorität hat.

## Beschreibung

Die Erfindung betrifft ein Hydrauliksystem zum Betätigen von wenigstens zwei Funktionsbereichen in einem Fahrzeug nach dem Oberbegriff des Anspruches 1.

Es ist bekannt, in Fahrzeugen für das Lenksystem und ein automatisiertes Handschaltgetriebe ein Hydrauliksystem vorzusehen, mit dem die diesen beiden Funktionsbereichen zugeordneten Ventile betätigt werden können. Für die beiden Funktionsbereiche werden eigene Hydrauliksysteme mit eigenen Ansteuerungen eingesetzt, wodurch sich eine aufwendige und kostspielige Ausbildung ergibt.

Der Erfindung liegt die Aufgabe zugrunde, das gattungsgemäße Hydrauliksystem so auszubilden, daß wenigstens zwei Funktionsbereiche des Fahrzeuges kostengünstig und dennoch zuverlässig mit dem Hydraulikmedium versorgt werden können.

Diese Aufgabe wird beim gattungsgemäßen Hydrauliksystem erfindungsgemäß mit den kennzeichnenden Merkmalen des Anspruches 1 gelöst.

Beim erfindungsgemäßen Hydrauliksystem wird durch das Verteilerventil gewährleistet, daß die beiden Funktionsbereiche des Fahrzeuges mit der ausreichenden Menge an Hydraulikmedium versorgt werden. Dabei ist das Verteilerventil so ausgebildet, daß einer der beiden Funktionsbereiche Vorrang hat. Ist der eine Funktionsbereich beispielsweise die Lenkung des Fahrzeuges und der andere Funktionsbereich das automatisierte Handschaltgetriebe des Fahrzeuges, dann wird mit dem Verteilerventil gewährleistet, daß die Lenkung des Fahrzeuges Priorität hat. Dadurch ist sichergestellt, daß unter allen Umständen die Lenkung des Fahrzeuges mit dem notwendigen Hydraulikmedium versorgt wird. Das erfindungsgemäße Hydrauliksystem ist konstruktiv einfach ausgebildet und benötigt nur einen geringen Einbauraum.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung ein erfindungsgemäßes Hydrauliksystem,
- Fig. 2: einen Schaltplan des Hydrauliksystems gemäß Fig. 1,
- Fig. 3: einen Axialschnitt durch ein Stromregelventil des erfindungsgemäßen Hydrauliksystems,
- Fig. 4: teilweise in Ansicht und teilweise im Axialschnitt ein Zuschaltventil des erfindungsgemäßen Hydrauliksystems,
- Fig. 5a: in einer Ansicht in Richtung des Pfeiles a in Fig. 5b eine Drossel des erfindungsgemäßen Hydrauliksystems,
- Fig. 5b: die Drossel in Seitenansicht,
- Fig. 5c: eine Ansicht in Richtung des Pfeiles b in Fig. 5b.

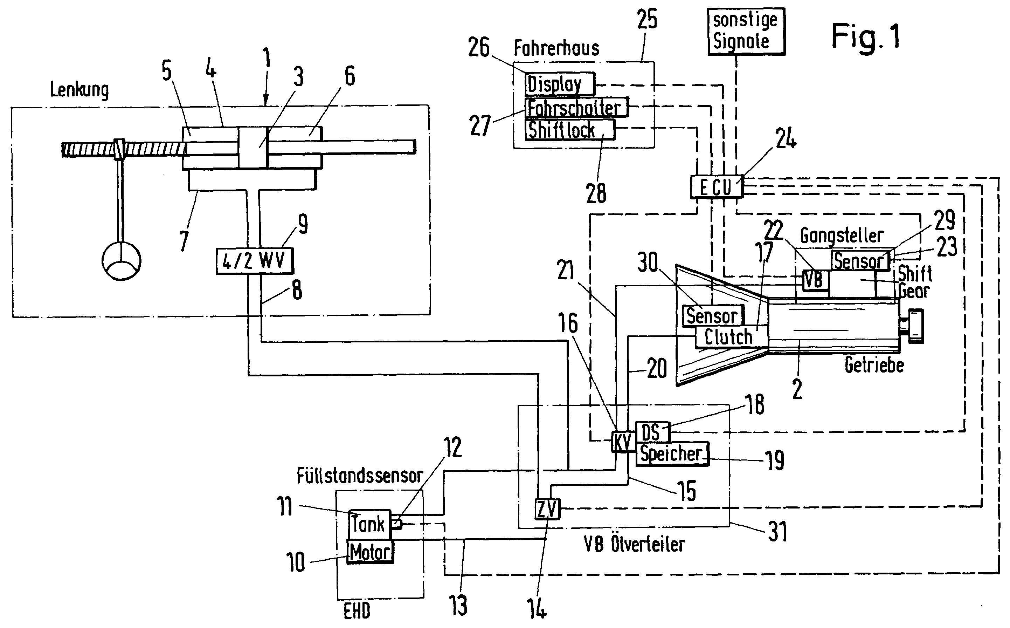

Mit dem Hydrauliksystem gemäß den Fig. 1 bis 5 werden wenigstens zwei Funktionen in einem Kraftfahrzeug betätigt. Im dargestellten Ausführungsbeispiel dient das Hydrauliksystem zur Betätigung der Lenkung und des Schaltgetriebes, das eine elektro- oder elektronisch-hydraulische Getriebeschaltung einschließlich der Kupplungsbetätigung sein kann. Das Hydrauliksystem kann aber auch beispielsweise zur Betätigung eines Schiebedaches im Kraftfahrzeug, des Bremssystems und dergleichen eingesetzt werden.

Fig. 1 zeigt das Hydrauliksystem, mit dem eine Lenkung 1 und ein Getriebe 2 betätigt werden können. Die Lenkung 1 hat einen beidseitig beaufschlagbaren Kolben 3, der in einem Zylinder 4 verschiebbar ist. Der Kolben 3 trennt zwei Zylinderräume 5 und 6 voneinander, in die jeweils eine Leitung 7, 8 mündet, über die Hydraulikmedium zugeführt wird. Die Zufuhr des Hydraulikmediums in die Zylinderräume 5, 6 wird durch ein 4/2-Wegeventil 9 gesteuert.

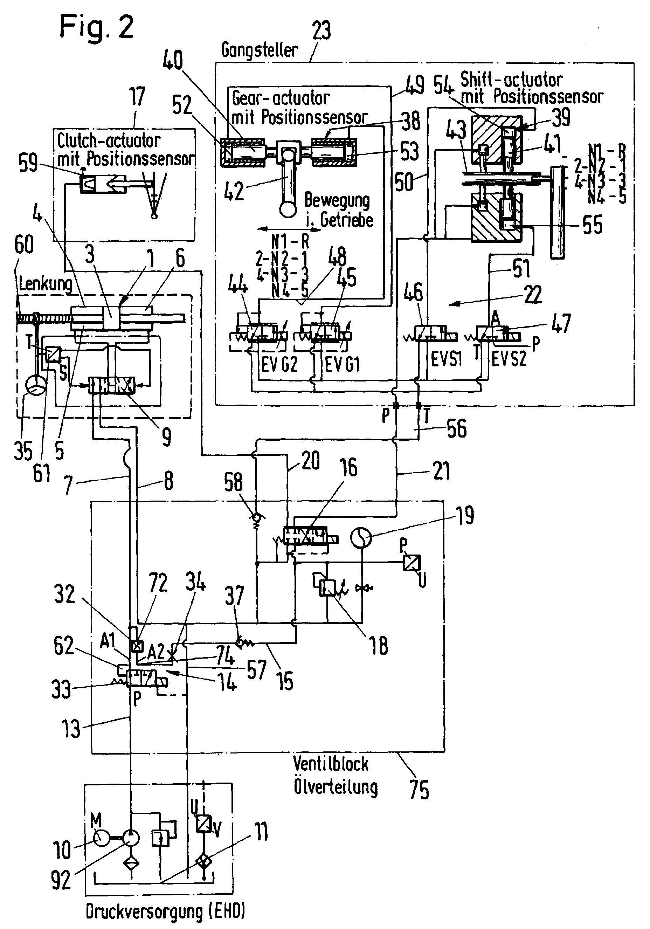

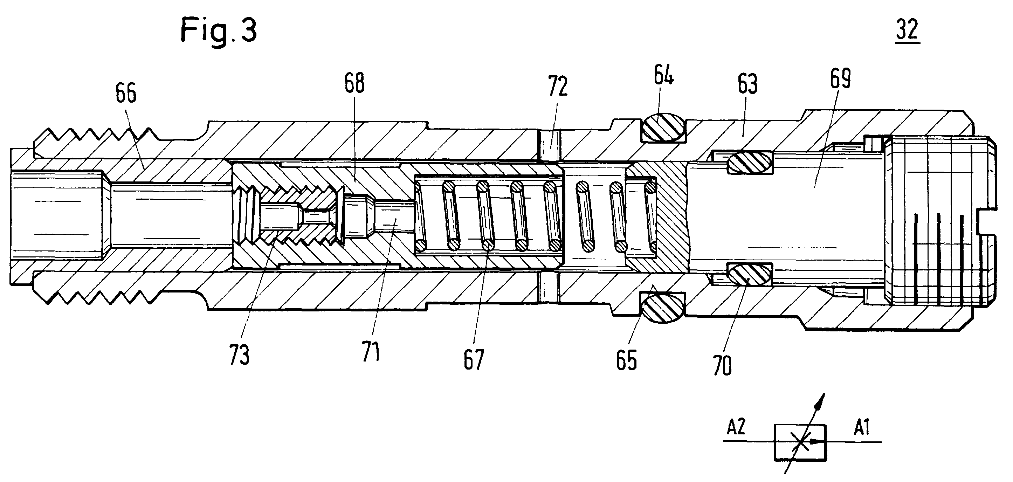

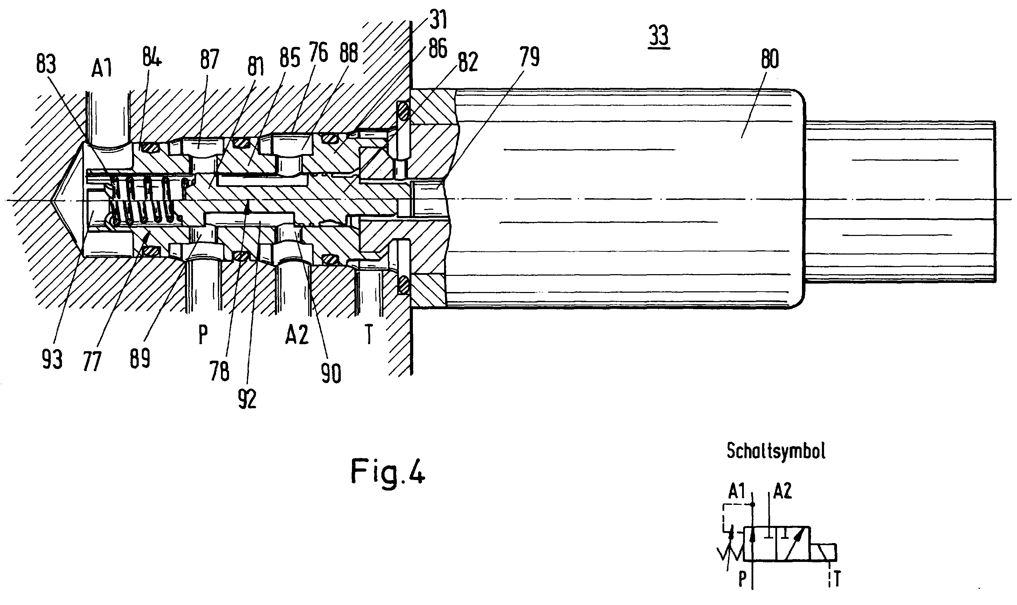

Das Hydraulikmedium wird mittels eines Motors 10 und einer Pumpe 92 (Fig. 2) aus einem Tank 11 gefördert. Er ist mit einem Füllstandssensor 12 versehen, der den Füllgrad des Tanks 11 überwacht. Das Hydraulikmedium wird über eine Druckleitung 13 einem Zuschaltventil 14 zugeführt, das anhand der Fig. 3 und 4 näher erläutert werden wird. Die von der Lenkung 1 kommende Hydraulikleitung 7 ist an das Zuschaltventil 14 angeschlossen. Von ihm führt eine weitere Hydraulikleitung 15 über ein Kupplungsventil 16 zu einer Kupplung 17, die dem Getriebe 2 zugeordnet ist. Das Zuschaltventil 14 sorgt dafür, daß die Lenkung 1, die Kupplung 17 und das Getriebe 2 gleichzeitig mit Hydrauliköl versorgt werden. Dabei ist das Zuschaltventil 14 so ausgebildet, daß die Zufuhr des Hydraulikmediums zur Lenkung 1 stets Priorität hat. Dadurch wird gewährleistet, daß das Fahrzeug auf jeden Fall lenkbar bleibt.

Dem Kupplungsventil 16 sind ein Drucksensor 18 und ein Speicher 19 zugeordnet. Eine Leitung 20 verbindet das Kupplungsventil 16 mit der Kupplung 17. Außerdem ist das Kupplungsventil 16 über eine Leitung 21 mit einem Ventilblock 22 eines Gangstellers 23 verbunden, mit dem in bekannter Weise die Gassen des Getriebes 2 ausgewählt und die Gänge in der ausgewählten Gasse eingelegt werden. Es handelt sich somit um ein automatisiertes Handschaltgetriebe, bei dem der Fahrer des Kraftfahrzeuges über einen entsprechenden Hebel oder über Tasten die von ihm gewünschten Gänge auswählt. Der Gangsteller 23, die Kupplung 17 und das Kupplungsventil 16 sind an eine Steuereinheit 24 angeschlossen, mit der die Funktionen dieser Teile überwacht und gesteuert werden. Die Steuereinheit 24 kann vom Fahrerhaus 25 des Kraftfahrzeuges aus betätigt werden. Wie Fig. 1 beispielhaft zeigt, können im Fahrerhaus ein Display 26, ein Fahrschalter 27 und eine Parksperre 28 an die Steuereinheit 24 angeschlossen sein. Dem Getriebe 2 und der Kupplung 17 sind Wegsensoren 29, 30 zugeordnet, die an die Steuereinheit 24 angeschlossen sind und mit denen der Verschiebeweg von Kolben überwacht werden kann, die Teil des Gangstellers 23 und der Kupplung 17 sind. Der Gangsteller 23 hat Zylinder zur Gassenwahl und zur Gangeinlegebewegung. Jedem Zylinder des Gangstellers 23 ist jeweils ein Wegsensor 29 zugeordnet, der vorteilhaft berührungslos arbeitet. In gleicher Weise arbeitet auch der Wegsensor 30 der Kupplung 17 berührungslos. Das Kupplungsventil 16 ist mit einer Schutzfunktion gegen Spannungsabfall ausgestattet.

Das Zuschaltventil 14, das Kupplungsventil 16, der Drucksensor 18 und der Speicher 19 sind Bestandteil eines Ventilblocks 31, der zur Ölverteilung herangezogen wird.

Wird das Hydrauliksystem eingeschaltet, wird das Füllen des Speichers durch die Steuereinheit 24 überwacht. Ist der Speicher gefüllt, erhält das Kupplungsventil 16 von der Steuereinheit 24 ein Signal zum Öffnen. Hat der Speicher 19 des Kupplungsventils 16 ausreichend Hydrauliköl, wird das Zuschaltventil 14 über die Steuereinheit 24 zurückgeschaltet. Sobald die Kupplung geöffnet ist, ist es über die Steuereinheit 24 möglich, den Verbrennungsmotor anzulassen.

Wie Fig. 2 zeigt, besteht das Zuschaltventil 14 aus einem Stromregelventil 32 und einem Schaltmagnetventil 33.

Ist das Lenkrad 35 nicht eingeschlagen, nimmt der Kolben 3 der Lenkung 1 die in Fig. 2 dargestellte Mittelstellung ein. Das Wegeventil 9 ist ebenfalls in Mittelstellung geschaltet, so daß sich das Hydrauliköl ohne Druck im Umlauf befindet. Das Schaltmagnetventil 33 ist in noch zu beschreibender Weise so ausgebildet, daß der größere Teil des Hydrauliköls über das Stromregelventil 32 zur Lenkung 1 gelangt, während ein kleinerer Teil über die Leitung 15, in der eine Drossel 34 und ein in Richtung auf das Kupplungsventil 16 öffnendes Rückschlagventil 37 sitzen, zum Kupplungsventil 16 gelangt. Beispielhaft ist das Schaltmagnetventil 33 so ausgebildet, daß 80 % des Hydrauliköls zur Lenkung 1 gelangen, während 20 % zum Kupplungsventil 16 strömen. Über die Leitung 20 ist das Kupplungsventil 16 mit der Kupplung 17 verbunden. Über die Leitung 21 ist an das Kupplungsventil 16 der Gangsteller 23 angeschlossen, der einen Aktuator 38 zum Gangeinlegen und einen Aktuator 39 zur Gassenwahl aufweist. Die beiden Aktuatoren 38, 39 sind in bekannter Weise ausgebildet und werden durch jeweils eine Kolben-Zylinder-Anordnung betätigt. Da die Ausbildung solcher Aktuatoren bekannt ist, wird sie nicht im einzelnen beschrieben. Durch Druckbeaufschlagung der Kolben 40, 41 der Aktuatoren 38, 39 werden Hebel 42, 43 bewegt, mit denen eine Schaltwelle des Getriebes 2 verschoben bzw. um ihre Achse gedreht wird, um die Gassen auszuwählen und die gewünschten Gänge einzulegen. Jedem Aktuator 38, 39 sind zwei Schaltmagnetventile 44, 45 und 46, 47 zugeordnet. Sie sind über die Leitungen 48, 49 und 50, 51 mit den entsprechenden Druckräumen 52, 53 und 54, 55 der Kolben-Zylinder-Einheiten der Aktuatoren 38, 39 verbunden. Die Schaltmagnetventile 44 bis 47 sind über die Leitung 21 an das Kupplungsventil 16 angeschlossen. Außerdem sind die Schaltmagnetventile 44 bis 47 über eine Tankleitung 56, 57 mit dem Tank 11 des Hydrauliksystems verbunden. Je nach Einstellung des Kupplungsventiles 16 werden die entsprechenden Schaltmagnetventile 44 bis 47 betätigt, um die gewünschte Gasse auszuwählen und den gewünschten Gang einzulegen. In der Tankleitung 56 liegt ein Rückschlagventil 58, das in Richtung auf den Tank 11 öffnet.

Die Kupplung 17 hat in bekannter Weise einen Kupplungsaktuator 59 mit dem Positionssensor 30.

Wird das Lenkrad 35 gedreht, dann erfolgt im Zylinder 4 der Lenkung 1 ein Druckaufbau. Wird beispielsweise das Lenkrad 35 in der Darstellung gemäß Fig. 2 nach rechts gedreht, dann wird über die Lenkspindel 60 der Kolben 3 nach rechts bewegt. Über ein Schaltelement 61 wird das Wegeventil 9 so geschaltet, daß das Hydraulikmedium aus dem Tank 11 über die Leitung 7 in den Druckraum 5 des Lenkzylinders 4 gelangt. Das Schaltmagnetventil 33 nimmt hierbei die in Fig. 2 dargestellte Lage ein. Das Hydraulikmedium im Druckraum 6 strömt über die Leitung 8, das Wegeventil 9 und die Tankleitung 57 zurück zum Tank 11. Das Schaltmagnetventil 33 hat eine Rückführleitung 62. Über sie wirkt der Druck, wenn ein Lenkeinschlag erfolgt, auf den Kolben des Schaltmagnetventils 33 und schiebt ihn auch bei erregtem Magneten zurück. Dadurch wird der Anschluß A2 des Schaltmagnetventils 33 geschlossen, so daß über den Druckanschluß P und den Arbeitsanschluß A1 des Schaltmagnetventils 33 das Hydraulikmedium vollständig zur Lenkung 1 gelangt.

Erfolgt der Lenkeinschlag in umgekehrter Richtung, kehren sich die Verhältnisse entsprechend um.

Sobald kein Drehen des Lenkrades 35 erfolgt, wird das Wegeventil 39, gesteuert über das Schaltelement 61, in die in Fig. 2 dargestellte Mittelstellung zurückgeschaltet. Über das Stromregelventil 32 wird die Ölzufuhr wieder so aufgeteilt, daß der größte Teil des Hydraulikmediums weiterhin zur Lenkung 1 und ein kleinerer Teil zum Kupplungsventil 16 gelangt.

Das Stromregelventil 32 (Fig. 3) hat ein buchsenförmiges Gehäuse 63, das in den Ventilblock 31 (Fig. 1) eingesetzt ist. Zur Abdichtung im Ventilblock sitzt auf dem Gehäuse 63 eine Ringdichtung 64, die in einer Ringnut 65 am Umfang des Gehäuses 63 untergebracht ist. In das eine Ende des Ventilgehäuses ist ein buchsenförmiger Anschlag 66 eingesetzt, an dem unter der Kraft wenigstens einer Druckfeder 67 ein Ventilkolben 68 anliegt. Die Druckfeder 67 stützt sich mit ihrem anderen Ende an einer Einstellschraube 69 ab, die in das andere Ende des Ventilgehäuses 63 geschraubt ist. Die Einstellschraube 69 sitzt mittels einer Ringdichtung 70 abgedichtet im Ventilgehäuse 63. Die Vorspannkraft der Feder 67 läßt sich mit der Einstellschraube 69 stufenlos und exakt einstellen.

Der Ventilkolben 68 hat eine ihn axial durchsetzende Bohrung 71, so daß das durch den Anschlag 66 strömende Hydraulikmedium durch den Ventilkolben 68 zu einer Steuerbohrung 72 in der Wandung des Gehäuses 63 strömen kann. Über die Steuerbohrung 72 kann das Hydrauliköl in die Leitung 7 und damit zur Lenkung 1 gelangen (Fig. 2). In der Bohrung 71 sitzt eine als Drossel wirkende Blende 73, die in das dem Anschlag 66 zugewandte Ende der Bohrung 71 des Ventilkolbens 68 geschraubt ist. Der Durchlaßquerschnitt der Blende 73 ist wesentlich kleiner als der Strömungsquerschnitt der Bohrung 71.

Wie Fig. 2 zeigt, ist das Schaltmagnetventil 33 über eine Leitung 74 mit dem nachgeschalteten Stromregelventil 32 verbunden. Die Leitung 74 ist an den Anschlag 66 angeschlossen, über den das Hydrauliköl vom Schaltmagnetventil 33 kommt. Es strömt durch den Anschlag 66, die Blende 73 und den Ventilkolben 68 zur Steuerbohrung 72, über die das Hydrauliköl in die Leitung 7 und von dort über das Wegeventil 9 zur Lenkung 1 gelangt.

Wie Fig. 2 zeigt, zweigt von der Leitung 74 die zum Kupplungsventil 16 führende Leitung 15 ab. Über sie wird ein kleinerer Teil des Hydrauliköls in der beschriebenen Weise zum Kupplungsventil 16 geführt.

Das Schaltmagnetventil 33 (Fig. 4) ist an den Ventilblock 31 angesetzt, der vorteilhaft auch das Stromregelventil 72 aufnimmt. Der Ventilblock 31 hat eine Bohrung 76, in die abgedichtet ein Gehäuse 77 eingesetzt ist. Es nimmt einen Kolben 78 auf, der an einem Stößel 79 eines Elektromagneten 80 des Ventiles 33 anliegt. Der Kolben 78 hat zwei mit Abstand voneinander liegende Stege 81, 82, die an der Innenwandung des Gehäuses 77 anliegen. In das Gehäuse 77 ist eine Druckfeder 83 eingesetzt, an der sich der Kolben 78 mit einem Ende abstützt.

Das Gehäuse 77 hat drei mit axialem Abstand voneinander liegende Ringstege 84 bis 86, mit denen es an der Innenwandung der Bohrung 76 dichtend anliegt. Zwischen den Ringstegen 84 bis 86 werden Ringräume 87, 88 gebildet, in die jeweils Bohrungen 89, 90 münden. Die Bohrungen 89 sind mit einem Druckanschluß P des Ventilblockes 31 und die Bohrung 90 mit einem Arbeitsanschluß A2 strömungsverbunden. Der Ventilblock 31 hat außerdem den Arbeitsanschluß A1 und den Tankanschluß T. Über den Arbeitsanschluß A1 gelangt das Hydrauliköl über die Leitung 7 (Fig. 2) zum Wegeventil 9 und damit zur Lenkung 1. An den Arbeitsanschluß A2 ist die Leitung 74 angeschlossen, die zum Stromregelventil 32 führt und an die die Leitung 15 angeschlossen ist, die das Magnetventil 33 mit dem Kupplungsventil 16 verbindet. Der Druckanschluß P ist mit der Pumpe 91 (Fig. 2) und der Anschluß T mit dem Tank 11 des Hydrauliksystems strömungsverbunden.

Zwischen den beiden Stegen 81, 82 des Kolbens 78 befindet sich ein Ringraum 92, in den das Hydraulikmedium strömen kann.

In der oberen Hälfte der Fig. 4 ist der Kolben 78 in einer Stellung dargestellt, wenn der Elektromagnet 80 nicht erregt ist. Unter der Kraft der Druckfeder 83 liegt der Kolben 78 an dem zurückgezogenen Stößel 79 des Elektromagneten 80 an. In dieser Stellung gibt der dem Elektromagneten 80 benachbarte Steg 82 des Kolbens 78 die Bohrungen 90 des Gehäuses 77 frei. Der andere Steg 81 des Kolbens 78 verschließt die Bohrungen 89, so daß über den Druckanschluß P kein Hydraulikmedium zum Arbeitsanschluß A2 gelangen kann. Der Druckanschluß P ist in dieser Stellung des Kolbens 78 aber mit dem zur Lenkung 1 führenden Arbeitsanschluß A1 strömungsverbunden. Der Steg 81 ist schmaler als die axiale Breite der Bohrungen 89, so daß das Hydraulikmedium vom Druckanschluß P über den Ringraum 87 und den vor dem Ringsteg 81 des Kolbens 78 befindlichen Teil der Bohrungen 89 in einen die Druckfeder 83 aufnehmenden Raum 93 des Gehäuses 77 gelangen kann. Er ist in Richtung auf den Arbeitsanschluß A1 offen, so daß das Hydraulikmedium zu diesem Anschluß strömen kann. Somit ist bei nicht erregtem Magnet 80 sichergestellt, daß das Hydraulikmedium auf jeden Fall zur Lenkung 1 des Kraftfahrzeuges strömen kann. Da der Steg 81 des Kolbens 78 den Durchfluß des Hydraulikmediums vom Ringraum 97 zum Ringraum 88 verschließt, strömt das gesamte Hydraulikmedium über den Arbeitsanschluß A1 zur Lenkung 1.

Wird der Elektromagnet 80 erregt, wird der Stößel 79 ausgefahren und mit ihm der Kolben 78 gegen die Kraft der Druckfeder 83 verschoben (untere Hälfte in Fig. 4). Über den zwischen den Stegen 81, 82 befindlichen Ringraum 92 ist nunmehr der Druckanschluß P mit dem Arbeitsanschluß A2 strömungsverbunden. Dagegen ist der Druckanschluß P durch den Steg 82 des Kolbens 78 vom Arbeitsanschluß A1 getrennt. Wie sich aus Fig. 2 ergibt, strömt das Hydraulikmedium vom Arbeitsanschluß A2 über die Leitung 74 zum Stromregelventil 32. Ein kleinerer Teil des Hydraulikmediums strömt außerdem über die Leitung 15 zum Kupplungsventil 16. Auf diese Weise ist sichergestellt, daß die Lenkung 1 auch bei erregtem Magnet 80 ausreichend Hydraulikmedium zur Verfügung hat.

Der Abstand der beiden Stege 81, 82 des Kolbens 78 voneinander ist kleiner als der kleinste Abstand der Steuerbohrungen 89, 90 des Gehäuses 77. Dadurch wird gewährleistet, daß die beiden Arbeitsanschlüsse A1, A2 durch den Kolben 78 nicht gleichzeitig geschlossen werden können.

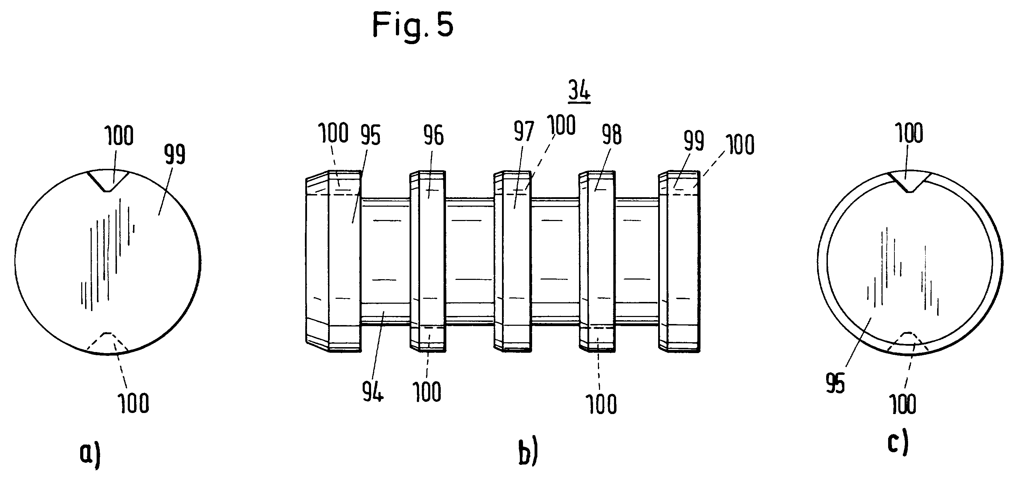

In der Leitung 15 befindet sich die Drossel 34, die anhand der Fig. 5a bis 5c näher erläutert werden soll. Diese Drossel 34 ist ebenfalls im Ventilblock 31 angeordnet und hat einen zylindrischen Grundkörper 94, der über seine Länge mit Ringblenden 95 bis 99 versehen ist, die mit Abstand voneinander vorgesehen sind. Jede Ringblende 95 bis 99 ist am Umfang mit einer randoffenen Vertiefung 100 versehen, durch die das Hydraulikmedium strömen kann. Die Vertiefungen 100 haben, in Achsrichtung der Drossel 34 gesehen, etwa dreieckförmigen Umriß und verjüngen sich radial nach innen. Die Drossel 34 sitzt abgedichtet in der entsprechenden Bohrung des Ventilblocks 31. Das durch die Leitung 36 strömende Hydraulikmedium kann lediglich durch die Vertiefungen 100 in den Ringblenden 95 bis 99 strömen. Vorteilhaft sind die Vertiefungen 100 benachbarter Ringblenden 95 bis 99 in Umfangsrichtung der Ringblenden versetzt zueinander angeordnet. Im dargestellten Ausführungsbeispiel sind die Vertiefungen 100 benachbarter Ringblenden jeweils um 180° versetzt zueinander angeordnet. Das durch die Vertiefung 100 der Ringblende 95 strömende Hydraulikmedium gelangt in den Ringraum zwischen den beiden Ringblenden 95, 96. Es kann dann lediglich um die um 180° versetzt angeordnete Vertiefung 100 der Ringblende 96 in den Ringraum zwischen den Blenden 96, 97 strömen. Von hier aus gelangt das Hydraulikmedium durch die wiederum um 180° versetzt angeordnete Vertiefung 100 der Ringblende 97 in den nächsten Ringraum zwischen den Blenden 97, 98. Auf diese Weise strömt das Hydraulikmedium, in Seitenansicht gesehen, mäanderförmig durch die Drossel 34. Durch die Reihenschaltung der einzelnen Ringblenden 95 bis 99 mit den Vertiefungen 100 ergibt sich eine hohe Drosselwirkung. Eine Verschmutzung der Drossel 34 wird zuverlässig verhindert. Aufgrund der kaskadenartigen Ausbildung der Drossel 34 treten keine Strömungsgeräusche auf. Insbesondere zeigt diese Drossel 34 nur eine sehr geringe Temperaturabhängigkeit. Die Vertiefungen 100 der Ringblenden 95 bis 99 sind jeweils gleich ausgebildet. Ihre radiale Tiefe beträgt nur etwa ein Viertel des Radius der jeweiligen Ringblende 95 bis 99. Durch die Form der Vertiefungen 100 kann die Drosselwirkung einfach eingestellt werden. Auch durch die Zahl der Ringblenden läßt sich die Drosselwirkung an den vorgesehenen Einsatzfall anpassen.

Das Hydrauliksystem ist so ausgebildet, daß die Lenkung 1 in bezug auf die Versorgung mit Hydraulikmedium Vorrang hat. Das Schaltmagnetventil 33 sorgt dafür, daß die Kupplung 17 und das Getriebe 2 nur dann mit Hydraulikmedium versorgt werden, wenn die Lenkung 1 nicht bewegt wird und die Ölversorgung der Lenkung 1 sichergestellt ist. Wird die Lenkung 1 betätigt und dementsprechend Hydraulikmedium benötigt, wird durch das Zuschaltventil 14 die Zufuhr des Hydraulikmediums in Richtung auf die Kupplung 17 und das Getriebe 2 unterbrochen. Sollten die Kupplung 17 und das Getriebe 2 während einer Lenkung des Fahrzeuges Hydraulikmedium benötigen, wird die Versorgung der Lenkung 1 mit dem Hydraulikmedium nicht unterbrochen, sondern lediglich verringert. Im Ausführungsbeispiel wird die Zufuhr des Hydraulikmediums zur Lenkung 1 in diesem Falle beispielsweise um etwa 20 % reduziert, so daß die Lenkung 1 noch etwa 80 % des Hydraulikmediums erhält, um die Lenkfunktion sicherzustellen. Der Umschaltvorgang des Zuschaltventils 14 unterbricht die Lenkungsversorgung nicht, da das Schaltmagnetventil 33 so ausgebildet ist, daß der Kolben 78 die beiden Arbeitsanschlüsse A1 und A2 nicht gleichzeitig verschließen kann. Mit dem beschriebenen Hydrauliksystem ist in bezug auf das Getriebe 2 eine Tippschaltung und auch eine automatische Schaltung möglich. Getriebeseitig können Sportprogramme, Winterfahrprogramme und dergleichen eingesetzt werden. Der Kraftstoffverbrauch wird um bis zu 8 % bei Einsatz des beschriebenen Hydrauliksystems verringert.

Lenkungsseitig wird eine erhebliche Verringerung in der Leistungsaufnahme erreicht. Bei maximaler Motordrehzahl wird die Leistungsaufnahme im Vergleich zu den bekannten Lösungen um etwa 0,8 kW reduziert. Die Leistung der Lenkung 1 ist unabhängig von der Motordrehzahl konstant, d.h. auch im Standgas bei extrem niedriger Drehzahl ist eine volle Servounterstützung der Lenkung 1 gewährleistet. Das Hydrauliksystem eignet sich für Start-Stop-Betrieb. Die Leistungsaufnahme des Lenkungssystems bei Geradeausfahrten des Fahrzeuges beträgt nur etwa 50 W. Werden im Fahrzeug Lenkwinkelsensoren eingebaut, ist in Verbindung mit ihnen eine geschwindigkeitsabhängige Regelung der Lenkung 1 möglich.

Da das Zuschaltventil 14 und das Kupplungsventil 16 im Ventilblock 31 untergebracht sind, benötigt das Hydrauliksystem nur einen sehr geringen Einbauraum. Durch das beschriebene Add-On-Prinzip sind keine Fertigungsinvestitionen für die Lenkung und das Getriebe des Fahrzeuges erforderlich. Durch das Baukastenprinzip der einzelnen Komponenten ist nur ein geringer Aufwand bei Neuentwicklungen notwendig. Durch die Zusammenführung der lenkungsseitigen und der getriebeseitigen Komponenten sind kurze Serienumsetzungszeiträume möglich. Außerdem kann der Systempreis durch die Kombination der beiden Funktionen niedrig gehalten werden.

Durch die Betrachtung des zeitlichen Ölbedarfs weiterer Funktionen im Fahrzeug können speziell fahrinaktive Systeme, zum Beispiel ein Verdeckantrieb, zusätzlich eingebaut werden. Auch sind andere Versorgungsverknüpfungen möglich, zum Beispiel mit einem Antiblockiersystem oder einer Fahrwerkverstellung. Es sind aber auch Verknüpfungen der Lenkung 1 mit einem hydraulischen Bremskraftverstärker, mit einem Hydromotor für einen Lüfter zur Motorkühlung, mit einer hydraulischen Faltdachsteuerung, mit einem hydraulischen System für Handicap Cars (Türen, Rampen), mit einer hydraulischen Allradsperrensteuerung, mit einem hydraulischen Fensterheber, mit einer hydraulischen Betätigung der Scheibenwischer, mit dem hydraulischen Öffnen und Schließen von Flügeltüren, Drehtüren, Heckklappentüren, Schiebetüren, Außenschwingtüren und dergleichen und mit einem elektro-hydraulischen Zentralverriegelungssystem möglich.

Für die einzelnen Funktionen sind trotz steigendem Komfort bei der Betätigung der Funktionen Zusatzantriebe nicht erforderlich. Vorteile der beschriebenen Ausbildung sind in der Einsparung weiterer Antriebskomponenten, in der hohen Leistungsdichte und Flexibilität des Hydrauliksystems, im flexiblen Einbau und Anordnung, in der Verringerung der üblichen Motoranbauten am eigentlichen Hauptantrieb des Fahrzeuges, in der Energieeinsparung durch Aufteilung der Funktionen, in der Gewichtseinsparung durch Reduzierung der Versorgungseinheiten, in der schwingungstechnischen Entkopplung vom Verbrennungsmotor und in der einfachen Nachrüstmöglichkeit zu sehen.

Durch die dem Kupplungsventil 16 vorgeschaltete kaskadenartige Drossel 34 wird der maximale Ölstrom in Richtung auf die Kupplung 17 und das Getriebe 2 so weit begrenzt, daß selbst bei totalem Druckabfall in dem System Kupplung/Getriebe die Hauptversorgung der Lenkung 1 erhalten bleibt. Durch die Sensoren 12, 18 für den Ölvorrat können Ölverluste zeitlich erfaßt und bewertet werden. In Verbindung mit der Auswertung des Druckabfallradienten des kupplungs/getriebeseitigen Drucksensors 18 in Werten unterhalb des für die Schaltung erforderlichen Mindestdrucks und des in Richtung auf die Kupplung 17 und das Getriebe 2 begrenzten Hydraulikmediumstromes ist es möglich, frühzeitig externe Leckagen zu erkennen und über das Schaltventil 33 die Zufuhr des Hydraulikmediums zur Kupplung 17 und zum Getriebe 2 zu unterbrechen. Eine lenkungsseitige Leckage kann über einen Ölmeßstab im Fahrzeug festgestellt werden. Darüber hinaus ist die gleiche Sicherheit wie bei der bestehenden Servounterstützung über einen Nebenabtrieb gegeben.

## Patentansprüche

1. Hydrauliksystem zum Betätigen von wenigstens zwei Funktionsbereichen in einem Fahrzeug, vorzugsweise zum Lenken und Schalten eines Kraftfahrzeuges, mit wenigstens einem Tank für das Hydraulikmedium, von dem aus das Hydraulikmedium über Ventile dem jeweiligen Funktionsbereich zuführbar ist, dadurch gekennzeichnet, daß den beiden Funktionsbereichen (1; 2, 17) ein Verteilerventil (14) zugeordnet ist, das den Strom des Hydraulikmediums zu den beiden Funktionsbereichen (1; 2, 17) so steuert, daß der eine Funktionsbereich (1) Vorrang vor dem anderen Funktionsbereich (2, 17) hat.

2. Hydrauliksystem nach Anspruch 1,
dadurch gekennzeichnet, daß das Verteilerventil (14) ein Schaltmagnetventil (33) aufweist, das mit zwei Arbeitsanschlüssen (A1, A2) versehen ist, an die jeweils einer der beiden Funktionsbereiche (1; 2, 17) angeschlossen ist, und daß vorteilhaft ein Kolben (78) des Schaltmagnetventils (33) zwei Stege (81, 82) aufweist, deren axiale Breite kleiner ist als die Querschnittsfläche von den Arbeitsanschlüssen (A1, A2) zugeordneten Bohrungen (89, 90) in einem Gehäuse (77) des Schaltmagnetventils (33).

3. Hydrauliksystem nach Anspruch 1 oder 2,
dadurch gekennzeichnet, daß dem Schaltmagnetventil (33) ein Stromregelventil (32) nachgeschaltet ist, das an den einen Arbeitsanschluß (A2) des Schaltmagnetventils (33) angeschlossen ist und vorteilhaft eine Drosselblende (73) aufweist, die in einem Kolben (68) vorgesehen ist, der vorzugsweise eine axiale Durchgangsbohrung (71) aufweist, in der die Drosselblende (73) untergebracht ist.

4. Hydrauliksystem nach Anspruch 3,
dadurch gekennzeichnet, daß der Kolben (68) unter dem Druck des Hydraulikmediums gegen Federkraft verschiebbar ist, die vorteilhaft einstellbar ist.

5. Hydrauliksystem nach einem der Ansprüche 1 bis 4,
dadurch gekennzeichnet, daß dem Schaltmagnetventil (33) ein Schaltventil (16) nachgeordnet ist, und daß vorteilhaft in der Leitungsverbindung zwischen dem Schaltmagnetventil (33) und dem Schaltventil (16) eine vorzugsweise kaskadenartige Drossel (34) liegt.

6. Hydrauliksystem nach Anspruch 5,
dadurch gekennzeichnet, daß die Drossel (34) einen Grundkörper (94) aufweist, der wenigstens zwei mit Abstand voneinander liegende Ringblenden (95 bis 99) hat, die jeweils mit einer Durchlaßöffnung (100) für das Hydraulikmedium versehen sind, die vorzugsweise in Umfangsrichtung der Ringblenden vorteilhaft um 180° versetzt zueinander angeordnet sind.

7. Hydrauliksystem nach Anspruch 6,
dadurch gekennzeichnet, daß die Durchlaßöffnungen (100) randseitige Vertiefungen in den Ringblenden (95 bis 99) sind.

8. Hydrauliksystem nach einem der Ansprüche 3 bis 7,
dadurch gekennzeichnet, daß das Stromregelventil (32) dem einen Funktionsbereich (1) und das Schaltventil (16) dem anderen Funktionsbereich (2, 17) zugeordnet ist.

9. Hydrauliksystem nach einem der Ansprüche 1 bis 8,
dadurch gekennzeichnet, daß das Verteilerventil (14) und das Schaltventil (16) in einem Ventilblock (75) untergebracht sind.

10. Hydrauliksystem nach einem der Ansprüche 2 bis 9,
dadurch gekennzeichnet, daß das Schaltmagnetventil (33) einen Druckanschluß (P) und einen Tankanschluß (T) aufweist.
